# EUROPÄISCHE PATENTSCHRIFT

(11) **EP 2 594 380 B1**
(45) Veröffentlichungstag und Bekanntmachung des Hinweises auf die Patenterteilung: **17.06.2015**
(21) Anmeldenummer: 12193578.7
(22) Anmeldetag: 21.11.2012
(51) Int. Cl.: B29C 33/00, B29C 70/48, B29C 70/54

(54) **Formwerkzeug und Verfahren zur Herstellung eines Faserverbundbauteils**
Moulding tool and process for manufacturing a fibre compound component
Outil de formage et procédé pour la fabrication d'un composant en composite

(30) Priorität: 21.11.2011 DE 102011055547
(43) Veröffentlichungstag der Anmeldung: 22.05.2013
(73) Patentinhaber: Deutsches Zentrum für Luft- und Raumfahrt e.V., 51147 Köln (DE)
(72) Erfinder: Hindersmann, Arne, 21680 Stade (DE); Malzahn, Sebastian, 21680 Stade (DE); Torstrick, Sven, 21739 Dollern (DE)
(74) Vertreter: Aisch, Sebastian

(56) Entgegenhaltungen:
- EP-A1- 0 533 418
- EP-A1- 1 721 719
- DE-A1-102005 053 691
- FR-A1- 2 828 131
- US-A- 5 023 041

## Beschreibung

Die Erfindung betrifft ein Formwerkzeug zur Herstellung eines Faserverbundbauteils, das in dem Formwerkzeug durch Infiltrieren eines Faserhalbzeuges mit einem Matrixharz und Polymerisieren des Matrixharzes gebildet wird, mit einem Faserhalbzeugbereich, in dem das Faserhalbzeug in das Formwerkzeug eingebracht wird, und mindestens einer Dichtung zum vakuum- oder druckdichten Verschließen des Faserhalbzeugbereichs. Die Erfindung betrifft auch ein Verfahren zur Herstellung eines solchen Faserverbundbauteils.

Bei der Herstellung eines Faserverbundbauteils im Infusions- oder Injektionsverfahren wird ein Faserhalbzeug, das in ein entsprechendes Formwerkzeug eingebracht ist, mit einem Matrixharz infiltriert, bis das Faserhalbzeug nach Möglichkeit vollständig mit dem Matrixharz durchtränkt ist. Anschließend erfolgt die Polymerisation, meist unter Beaufschlagung von Wärme, um eine entsprechende Harzreaktion mit dem Faserhalbzeug zu erreichen und um das Faserverbundbauteil auszuhärten.

Die hierfür verwendeten Werkzeuge werden dabei auch Formwerkzeuge genannt, da sie in der Regel zumindest an einer Seite eine entsprechende Oberflächenstruktur aufweisen, die dem späteren Faserverbundbauteil seine spezifizierte Form verleihen.

Damit das Faserhalbzeug, das meist aus einem textilen Fasermaterial besteht, bei einem angestrebten Faservolumengehalt von beispielsweise 60 % vollständig mit dem Matrixharz infiltriert wird, ist ein Druckgefälle zwischen dem Harzvorrat und dem Bauteil notwendig, das entweder durch einen Unterdruck im Bauteil oder einem Überdruck im Harzvorrat bzw. eine Kombination hieraus erreicht wird. Damit dieses Druckgefälle konstant aufrechterhalten werden kann, muss der Aufbau, insbesondere das Formwerkzeug, vakuumdicht bzw. druckdicht verschlossen sein.

Weist das Formwerkzeug jedoch während des Infiltrationsprozesses, bei dem das Matrixharz in das Faserhalbzeug injiziert wird, Undichtigkeiten auf, so kann das Druckgefälle nicht konstant aufrechterhalten werden, was bei einem hohen Faservolumengehalt zu einer meist nicht vollständigen Benetzung des kompletten Faserhalbzeuges führt. Hierdurch treten in dem später ausgehärteten Faserverbundbauteil Fehlstellen auf, die gerade bei sicherheitskritischen Bauteilen schnell zu einem Ausschuss führen.

Ein Problem, das häufig zu Undichtigkeiten in dem gesamten Aufbau führt, ist der Verschleiß der verwendeten Dichtungen, mit denen das Formwerkzeug vakuum- oder druckdicht verschlossen werden soll. Aufgrund der Tatsache, dass die verwendeten Harzsysteme die Eigenschaft besitzen, auch kleine Spalten und Kavitäten auszufüllen, kommen die verwendeten Dichtungen in der Regel während des Herstellungsprozesses mit dem Matrixharz in Kontakt, was nach der Aushärtung bzw. Polymerisation des Materixharzes als Rückstände an den Dichtungen verbleibt. Diese Harzrückstände führen jedoch dazu, dass bei einer erneuten Verwendung Undichtigkeiten entstehen, die sich negativ auf die Bauteilqualität auswirken.

Daher beruhen die bisherigen Dichtungskonzepte darauf, dass die Dichtungen entweder nur einmal benutzt werden bzw. nach ihrem Gebrauch aufwändig gereinigt werden müssen. Insbesondere bei komplexen Bauteilen kann dies sehr aufwändig sein und nimmt gerade bei einem automatisierten Prozess viel Zeit in Anspruch.

Ein weiteres Problem ergibt sich dann, wenn während des Infiltrationsprozesses kontinuierlich das Druckgefälle aufrechterhalten werden muss, beispielsweise durch eine an das Formwerkzeug angeschlossene Vakuumpumpe. Um ein Eintreten von Matrixharz in die Vakuumpumpe während des Injektionsprozesses zu vermeiden, wird die Vakuumpumpe mit einer Harzfalle abgesichert. Nach dem Gebrauch der Harzfalle muss diese ebenfalls gereinigt und ausgetauscht werden, um Rückstände zu vermeiden. Außerdem kann es bei der Ansammlung von großen Harzmengen in der Harzfalle zu einer exothermen Reaktion kommen, wodurch große Wärmeenergie freigesetzt wird.

Aus der EP 0 533 418 A1 ist ein Verfahren und ein Formwerkzeug zur Herstellung eines Faserverbundbauteils bekannt, bei dem sich an dem Faserbereich eine Spalte anschließt, in die überschüssiges Matrixharz einströmen und schnell aushärten kann.

Aus der DE 10 2005 053 601 A1 ist ein Formwerkzeug bekannt, bei dem sich an den Faserhalbzeugbereich eine Harzfalle anschließt, wobei zwischen Harzfalle und Faserhalbzeugbereich ein syphonartiger Übergangsbereich vorgesehen ist.

Aus der EP 1 721 719 A1 ist ein Formwerkzeug bekannt, bei dem sich zwischen dem Faserhalbzeugbereich und der Dichtung ein zusätzlicher Faserkanal befindet, mit dem überschüssiges Material in den Außenbereich des Formwerkzeuges transportiert werden kann.

Aus der FR 2 828 131 ist ebenfalls ein Formwerkzeug bekannt, bei dem ein Matrixharz auf der einen Seite injiziert und an einer anderen Stelle wieder abgesaugt werden kann, wobei sich hierzwischen das Fasermaterial befindet. Am Endbereich der Absaugstelle ist darüber hinaus ein Harzkanal zur Aufnahme des Matrixharzes vorgesehen.

Aus der US 5,023,041 ist ein Formwerkzeug bekannt, bei dem Matrixharz injiziert werden kann, das mit Hilfe einer Überdruckeinrichtung in das Fasermaterial hineingedrückt wird.

Es ist daher Aufgabe der vorliegenden Erfindung ein Formwerkzeug zur Herstellung eines Faserverbundbauteils sowie ein Verfahren hierzu anzugeben, mit dem sich Undichtigkeiten im Anlagenaufbau vermeiden lassen.

Die Aufgabe wird mit dem Formwerkzeug der eingangs genannten Art erfindungsgemäß dadurch gelöst, dass zwischen dem Faserhalbzeugbereich und der mindestens einen Dichtung eine Harzbremse vorgesehen ist, die zur Aufnahme von Matrixharz während der Infiltration des in dem Faserhalbzeugbereich eingebrachten Faserhalbzeuges mit dem Matrixharz ausgebildet ist.

Erfindungsgemäß wird somit vorgeschlagen, dass das Formwerkzeug zur Herstellung des Faserverbundbauteils zwischen der Dichtung, die den Faserhalbzeugbereich vakuumdicht oder druckdicht verschließt, und dem Faserhalbzeugbereich eine Harzbremse vorgesehen ist, die das Matrixharz während des Injektionsprozesses aufnimmt und somit die Dichtung vor einer Verunreinigung mit dem Matrixharz schützt. Während des Injektionsprozesses kommt die Dichtung somit mit dem Matrixharz nicht mehr in Verbindung, was die Wahrscheinlichkeit von Undichtungen aufgrund von Harzrückständen an den Dichtungen weitestgehend ausschließt.

Dadurch wird erreicht, dass die zum vakuum- oder druckdichten Verschließen des Formwerkzeuges verwendeten Dichtungen wieder verwendbar sind, was die Kosten der Bauteilproduktion senkt. Darüber hinaus können höhere Produktionszyklen, insbesondere bei der automatisierten Herstellung, gefahren werden, da die Dichtungen nicht mehr aufwändig gereinigt werden müssen, was insbesondere bei komplexen Bauteilen sehr aufwändig sein kann.

Erfindungsweise enthält die Harzbremse ein Vlies- und/oder Filzmaterial, wodurch überschüssiges Matrixharz aufgenommen wird. Wird darüber hinaus das Vlies- und/oder Filzmaterial hoch kompaktiert, so erhöht sich der Fließwiderstand innerhalb der Harzbremse derart, dass das überschüssige Matrixmaterial nicht mit den Dichtungen zum vakuum- oder druckdichten Verschließen des Faserhalbzeugbereiches in Kontakt kommt.

Es ist daher besonders vorteilhaft, wenn die Harzbremse eine höhere Materialdichte als das Faserhalbzeug aufweist, wodurch die Fließfront innerhalb des Faserhalbzeuges während des Injektionsprozesses aufrechterhalten werden kann, während in der Harzbremse die Fließgeschwindigkeit des Matrixharzes vollständig zum Erliegen kommen kann.

Nach Herstellung des Faserverbundbauteils, d. h. wenn das Matrixharz ausgehärtet und mit dem Faserhalbzeug entsprechend reagiert hat, wird die Harzbremse entfernt und nicht wieder verwendet. Werden kostengünstige Materialien für die Harzbremse, wie beispielsweise Vlies oder Filz, verwendet, so lassen sich hier entsprechende Kosten im Produktionszyklus einsparen.

In einer Ausführungsform weist das Formwerkzeug ein Unterwerkzeug und ein Oberwerkzeug auf, wobei zwischen dem Oberwerkzeug und dem Unterwerkzeug durch eine entsprechende Kontur der Oberfläche der Faserhalbzeugbereich gebildet wird. Werden die beiden Werkzeughälften zusammengefügt, so wird durch den im inneren verbleibenden Hohlraum der Faserhalbzeugbereich gebildet, in den das Faserhalbzeug eingebracht werden kann. Insbesondere an den Rändern werden entsprechende Dichtungen angeordnet, die das Formwerkzeug vakuum- oder druckdicht verschließen. Zwischen der Dichtung und dem Faserhalbzeugbereich wird zwischen dem Unter- und dem Oberwerkzeug dann die Harzbremse angeordnet, um die Dichtungen vor dem Matrixharz zu schützen.

Ganz besonders vorteilhaft ist es, wenn die Harzbremse einen Reaktionsbeschleuniger enthält, der zur Beschleunigung der Polymerisationsreaktion des Matrixharzes eingerichtet ist. Hierdurch wird erreicht, dass in der Harzbremse das Matrixharz wesentlich schneller reagiert, was zu einer zügigen Aushärtung des Matrixharzes und somit einem vollständigen Abbremsen und Speichern des Matrixharzes in der Harzbremse führt. Das Matrixharz wird somit in der Harzbremse bis zur vollständigen Aushärtung des Bauteils eingeschlossen.

Weiterhin ist es besonders vorteilhaft, wenn ein Heizelement vorgesehen ist, das zum Erwärmen der Harzbremse während der Infiltration des Matrixharzes ausgebildet ist. Auch hierdurch lässt sich die Polymerisationsreaktion beschleunigen, was zu einem besseren Einschluss des überschüssigen Matrixharzes in der Harzbremse führt.

In einer weiteren besonders vorteilhaften Ausführungsform ist in dem Formwerkzeug zwischen der mindestens einen Dichtung und der Harzbremse ein Vakuum- oder Druckanschluss zum Anschließen einer Vakuum- oder Druckquelle vorgesehen. Dadurch, dass der Vakuum- bzw. Druckanschluss zwischen der Dichtung und der Harzbremse angeordnet ist, lässt sich ein Eintreten des Matrixharzes in die Vakuumpumpe verhindern. Eine optional verwendete Harzfalle wird dabei in der Regel wesentlich seltener beansprucht und die hierfür benötigten Aufwendungen zur Reinigung der Harzfalle verringern sich erheblich.

Die Aufgabe wird im Übrigen auch in einem Verfahren zur Herstellung eines Faserverbundbauteils, das in einem Formwerkzeug durch Infiltrieren eines Faserhalbzeuges mit einem Matrixharz und Polymerisieren des Matrixharzes gebildet wird, gelöst mit den Schritten:
a) Einbringen eines Faserhalbzeuges in einen Faserhalbzeugbereich des Formwerkzeuges,
b) Anordnen mindestens einer Dichtung im Formwerkzeug zum vakuum- oder druckdichten Verschließen eines Faserhalbzeugbereiches,
c) Anordnen einer Harzbremse im Formwerkzeug zwischen dem Faserhalbzeugbereich und der mindestens einen Dichtung, die zur Aufnahme von Matrixharz während der Infiltration des in den Faserhalbzeugbereich eingebrachten Faserhalbzeuges mit dem Matrix ausgebildet ist wobei die Harzbremse ein Vlies- und/oder Filzmaterial enthält, und
d) Infiltrieren des Faserhalbzeuges mit dem Matrixharz und Polymerisieren des injizierten Matrixharzes, um das Faserverbundbauteil zu bilden.

Vorteilhafte Ausgestaltungen des Verfahrens finden sich in den entsprechenden Unteransprüchen.

Die Erfindung wird anhand der beigefügten Zeichnungen beispielhaft näher erläutert. Es zeigen:
- Fig. 1: - schematische Darstellung eines Formwerkzeuges in einer ersten Ausführungsform;
- Fig. 2: - schematische Darstellung eines Formwerkzeuges in einer zweiten Ausführungsform.

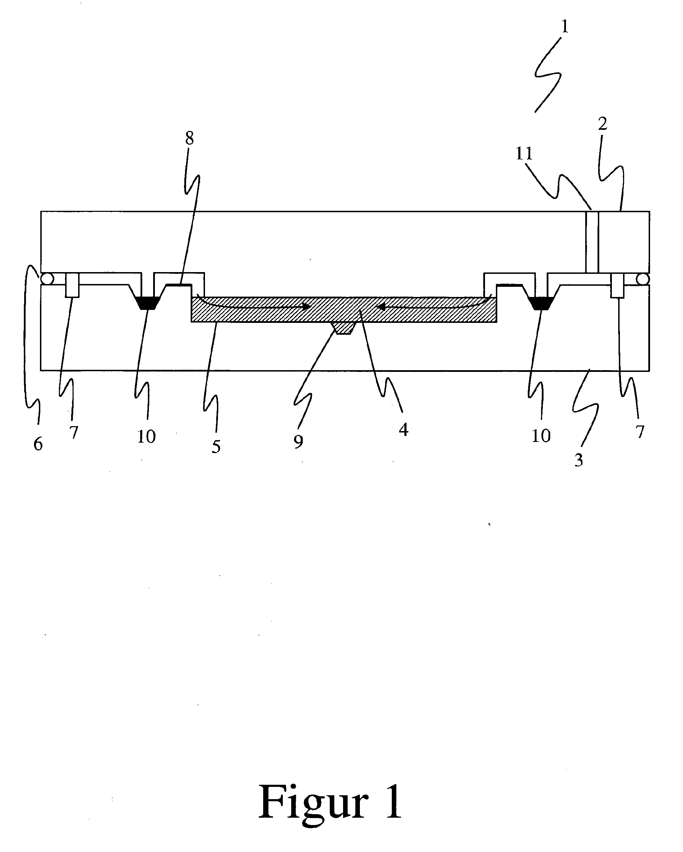

Figur 1 zeigt schematisch ein Formwerkzeug 1, das aus einem Oberwerkzeug 2 und einem Unterwerkzeug 3 besteht. Wird das Oberwerkzeug und das Unterwerkzeug zusammengefügt, so bildet sich ein Hohlraum, in den ein Faserhalbzeug 4 eingelegt werden kann. Das Faserhalbzeug 4 ist dabei in einen dafür vorgesehenen Faserhalbzeugbereich 5 derart eingebracht, dass es dort mit einem Matrixharz infiltriert und ausgehärtet werden kann.

Mit Hilfe von Distanzelementen 6 wird das Oberwerkzeug und das Unterwerkzeug in er gewünschten Entfernung voneinander beabstandet zusammengefügt. Eine Dichtung 7 sorgt dafür, dass der von den Dichtungen 7 eingeschlossene Werkzeugbereich, insbesondere der Faserhalbzeugbereich 5, vakuum- oder druckdicht verschließbar ist, so dass ein Druckgefälle aufgebaut werden kann. Darüber hinaus ist in der Nähe des Faserhalbzeugbereiches 5 ein Ringanguss vorgesehen, durch den das Matrixmaterial bzw. Matrixharz in das Formwerkzeug eingebracht wird, so dass das Faserhalbzeug 4 durch das Matrixharz infiltriert werden kann. Über eine zentrale Spülkavität 9 kann überschüssiges Matrixharz ablaufen.

Zwischen dem Faserhalbzeugbereich 5 und der Dichtung 7 ist des Weiteren eine Harzbremse 10 angeordnet, die beispielsweise aus einem Vlies- und oder Filzmaterial in einer hochkompaktierten Form gebildet sein kann. Es ist hierbei insbesondere vorteilhaft, wenn die Harzbremse 10 eine Materialdichte aufweist, die höher ist als die Materialdichte des Faserhalbzeuges 4. Dadurch kann ein Einschließen des Matrixharzes gut sichergestellt werden.

Durch die Pfeile in Figur 1 in Richtung zentrale Spülkavitäten 9 wird die Fließfront des Matrixharzes in dem Faserhalbzeug 4 dargestellt. Das durch den Ringanguss 8 einströmende Matrixharz wird allerdings aufgrund des Druckgefälles ebenso in Richtung Dichtung 7 bewegt, wobei es hierbei zuvor von der Harzbremse 10 aufgefangen und eingeschlossen wird.

Ist die Harzbremse 10 zusätzlich mit einem Reaktionsbeschleuniger getränkt, so erfolgt hier eine sehr schnelle Aushärtung des Matrixharzes, während das das Faserhalbzeug infiltrierte Matrixharz noch nicht vollständig polymerisiert ist. Somit erfolgt relativ schnelle ein Schutz vor der Kontamination der Dichtung 7 mit Matrixharz.

Durch die Verwendung einer derartigen Harzbremse 10 entsteht insbesondere der Vorteil, dass anfänglich, d. h. vor Infiltration mit dem Matrixharz, das Bauteil evakuiert werden kann, um das Druckgefälle herzustellen. Denn die Harzbremse ist im unfiltrierten Zustand luftdurchlässig. Erst bei Kontakt mit dem Matrixharz und dem Einschließen des Matrixharz in der Harzbremse, beispielsweise durch vorzeitige Polymerisation, wird das Harz an einem weiteren Voranschreiten in Richtung Dichtung 7 gehindert.

Alternativ kann die Polymerisation in der Harzbremse 10 auch durch eine Erwärmung der Harzbremse 10, beispielsweise durch Heizelemente erreicht werden.

Zwischen der Harzbremse 10 und der Dichtung kann des Weiteren eine Bohrung für einen Vakuumanschluss bzw. Druckanschluss 11 vorgesehen sein, durch das Formwerkzeug 1 evakuiert bzw., sofern gewünscht, mit einem Druck beaufschlagt werden kann. Durch die Anordnung der Bohrung zwischen der Harzbremse 10 und der Dichtung 7 wird darüber hinaus ein Kontaminieren der Vakuumpumpe mit Matrixharz vermieden, was an und für sich eine Harzfalle überflüssig macht.

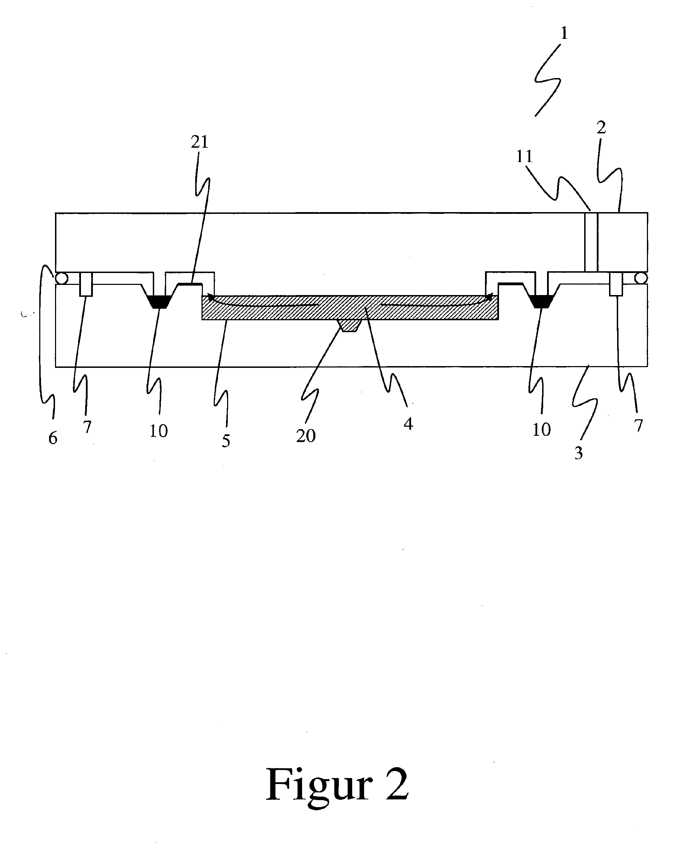

Figur 2 zeigt das Formwerkzeug 1 in einer alternativen Ausführungsform, bei der die zentrale Spülkavität 9 in Figur 1 ein zentraler Anguss 20 ist. Die Fließrichtung des Harzes ist nunmehr entgegen der Richtung aus Figur 1, und zwar in Richtung der Harzbremse 10. In diesem Fall kann die Harzbremse 10 auch gleichzeitig als Spülkavität genutzt werden, was jedoch auch durch eine ringförmige Spülkavität 21 erreicht werden kann.

Durch die vorzeitige Polymerisation des Matrixharzes in der Harzbremse 10 wird auch hier eine Kontamination der Dichtungen 7 zuverlässig vermieden.

## Patentansprüche

1. Formwerkzeug (1) zur Herstellung eines Faserverbundbauteils, das in dem Formwerkzeug (1) durch Infiltrieren eines Faserhalbzeuges (4) mit einem Matrixharz und Polymerisieren des Matrixharzes gebildet wird, mit
a) einem Faserhalbzeugbereich (5), in den das Faserhalbzeug (4) in das Formwerkzeug (1) eingebracht wird, und
b) mindestens einer Dichtung (7) zum vakuum- oder druckdichten Verschließen des Faserhalbzeugbereiches (5),
**dadurch gekennzeichnet, dass**
c) zwischen dem Faserhalbzeugbereich (5) und der mindestens einen Dichtung (7) eine Harzbremse (10) vorgesehen ist, die zur Aufnahme von Matrixharz während der Infiltration des in dem Faserhalbzeugbereich (5) eingebrachten Faserhalbzeuges (4) mit dem Matrixharz ausgebildet ist, wobei die Harzbremse (10) ein Vlies- und/oder Filzmaterial enthält.

2. Formwerkzeug (1) nach Anspruch 1, **dadurch gekennzeichnet, dass** das Formwerkzeug (1) ein Unterwerkzeug (3) und ein Oberwerkzeug (2) hat, wobei zwischen dem Unter- und Oberwerkzeug des Formwerkzeuges (1) der Faserhalbzeugbereich (5) gebildet und die mindestens eine Dichtung (7) und die Harzbremse (10) angeordnet sind.

3. Formwerkzeug (1) nach Anspruch 1 oder 2, **dadurch gekennzeichnet, dass** die Harzbremse (10) eine höhere Materialdichte als das Faserhalbzeug (4) aufweist.

4. Formwerkzeug (1) nach einem der vorhergehenden Ansprüche, **dadurch gekennzeichnet, dass** die Harzbremse (10) einen Reaktionsbeschleuniger enthält, der zur Beschleunigung der Polymerisationsreaktion des Matrixharzes ausgebildet ist.

5. Formwerkzeug (1) nach einem der vorhergehenden Ansprüche, **dadurch gekennzeichnet, dass** ein Heizelement vorgesehen ist, das zum Erwärmen der Harzbremse (10) während der Infiltration des Matrixharzes ausgebildet ist.

6. Formwerkzeug (1) nach einem der vorhergehenden Ansprüche, **dadurch gekennzeichnet, dass** zwischen der Harzbremse (10) und der mindestens einen Dichtung (7) ein Vakuum- oder Druckanschluss (11) an dem Formwerkzeug (1) zum Anschließen einer Vakuum- oder Druckquelle vorgesehen ist.

7. Verfahren zur Herstellung eines Faserverbundbauteils, das in einem Formwerkzeug durch Infiltrieren eines Faserhalbzeuges mit einem Matrixharz und Polymerisieren des Matrixharzes gebildet wird, mit den Schritten:
a) Einbringen eines Faserhalbzeuges in einen Faserhalbzeugbereich des Formwerkzeuges,
b) Anordnen mindestens einer Dichtung im Formwerkzeug zum vakuum- oder druckdichten Verschließen des Faserhalbzeugbereiches,
c) Anordnen einer Harzbremse im Formwerkzeug zwischen den Faserhalbzeugbereich und der mindestens einen Dichtung, die zur Aufnahme von Matrixharz während der Infiltration des in dem Faserhalbzeugbereich eingebrachten Faserhalbzeuges ausgebildet ist, wobei die Harzbremse (10) ein Vlies- und/oder Filzmaterial enthält, und
d) Infiltrieren des Faserhalbzeuges mit dem Matrixharz und Polymerisieren des injizierten Matrixharzes, um das Faserverbundbauteil zu bilden.

8. Verfahren nach Anspruch 7, **dadurch gekennzeichnet, dass** die Harzbremse eine höhere Materialdichte als das Faserhalbzeug aufweist.

9. Verfahren nach Anspruch 7 oder 8, **gekennzeichnet durch** Einbringen eines Reaktionsbeschleunigers in die Harzbremse, der zur Beschleunigung der Polymerisationsreaktion des Matrixharzes ausgebildet ist.

10. Verfahren nach einem der Ansprüche 7 bis 9, **gekennzeichnet durch** Beheizen der Harzbremse mittels eines Heizelementes während der Infiltration des Faserhalbzeuges mit dem Matrixharz.

## Claims

1. Moulding tool (1) for producing a fibre composite component, said fibre composite component being formed in the moulding tool (1) by infiltration of a semifinished fibre product (4) with a matrix resin and polymerization of the matrix resin, said moulding tool having
a) a semifinished fibre product region (5), into which the semifinished fibre product (4) is introduced into the moulding tool (1), and
b) at least one seal (7) for the vacuum-tight or pressure-tight closure of the semifinished fibre product region (5),
**characterized in that**
c) a resin brake (10) is provided between the semifinished fibre product region (5) and the at least one seal (7) and is designed to take up matrix resin during the infiltration of the semifinished fibre product (4) introduced in the semifinished fibre product region (5) with the matrix resin, the resin brake (10) containing a nonwoven material and/or felt material.

2. Moulding tool (1) according to Claim 1, **characterized in that** the moulding tool (1) has a lower mould (3) and an upper mould (2), the semifinished fibre product region (5) being formed between the lower mould and the upper mould of the moulding tool (1) and the at least one seal (7) and the resin brake (10) being arranged between the lower mould and the upper mould of the moulding tool (1).

3. Moulding tool (1) according to Claim 1 or 2, **characterized in that** the resin brake (10) has a higher material density than the semifinished fibre product (4).

4. Moulding tool (1) according to one of the preceding claims, **characterized in that** the resin brake (10) contains a reaction accelerator, which is designed to accelerate the polymerization reaction of the matrix resin.

5. Moulding tool (1) according to one of the preceding claims, **characterized in that** provision is made of a heating element, which is designed to heat the resin brake (10) during the infiltration of the matrix resin.

6. Moulding tool (1) according to one of the preceding claims, **characterized in that** a vacuum or pressure connection (11) is provided on the moulding tool (1) between the resin brake (10) and the at least one seal (7) for connecting a vacuum or pressure source.

7. Method for producing a fibre composite component, said fibre composite component being formed in a moulding tool by infiltration of a semifinished fibre product with a matrix resin and polymerization of the matrix resin, said method comprising the following steps:
a) introducing a semifinished fibre product into a semifinished fibre product region of the moulding tool,
b) arranging at least one seal in the moulding tool for the vacuum-tight or pressure-tight closure of the semifinished fibre product region,
c) arranging a resin brake in the moulding tool between the semifinished fibre product region and the at least one seal, said resin brake being designed to take up matrix resin during the infiltration of the semifinished fibre product introduced in the semifinished fibre product region, the resin brake (10) containing a nonwoven material and/or felt material, and
d) infiltrating the semifinished fibre product with the matrix resin and polymerizing the injected matrix resin in order to form the fibre composite component.

8. Method according to Claim 7, **characterized in that** the resin brake has a higher material density than the semifinished fibre product.

9. Method according to Claim 7 or 8, **characterized by** the introduction of a reaction accelerator into the resin brake, said reaction accelerator being designed to accelerate the polymerization reaction of the matrix resin.

10. Method according to one of Claims 7 to 9, **characterized by** the heating of the resin brake by means of a heating element during the infiltration of the semifinished fibre product with the matrix resin.

## Revendications

1. Outil de moulage (1) pour la fabrication d'un composant en composite de fibres, qui est formé dans l'outil de moulage (1) par infiltration d'un demi-produit de fibres (4) avec une résine de matrice et polymérisation de la résine de matrice, avec
a) une région de demi-produit de fibres (5), dans laquelle le demi-produit de fibres (4) est introduit dans l'outil de moulage (1), et
b) au moins un joint (7) pour la fermeture étanche au vide ou à la pression de la région de demi-produit de fibres (5),
**caractérisé en ce que**
c) il est prévu entre la région de demi-produit de fibres (5) et ledit au moins un joint (7) un frein de résine (10), qui est formé afin de contenir de la résine de matrice pendant l'infiltration du demi-produit de fibres (4) introduit dans la région de demi-produit de fibre (5) avec la résine de matrice, dans lequel le frein de résine (10) contient un matériau de non-tissé et/ou de feutre.

2. Outil de moulage (1) selon la revendication 1, **caractérisé en ce que** l'outil de moulage (11) comporte un outil inférieur (3) et un outil supérieur (2), dans lequel la région de demi-produit de fibres (5) est formée et ledit au moins un joint (7) et le frein de résine (10) sont disposés entre l'outil inférieur et l'outil supérieur de l'outil de moulage (1).

3. Outil de moulage (1) selon la revendication 1 ou 2, **caractérisé en ce que** le frein de résine (10) présente une densité de matériau plus élevée que le demi-produit de fibres (4).

4. Outil de moulage (1) selon l'une quelconque des revendications précédentes, **caractérisé en ce que** le frein de résine (10) contient un accélérateur de réaction, qui est réalisé en vue d'accélérer la réaction de polymérisation de la résine de matrice.

5. Outil de moulage (1) selon l'une quelconque des revendications précédentes, **caractérisé en ce qu'**il est prévu un élément de chauffage, qui est réalisé en vue de chauffer le frein de résine (10) pendant l'infiltration de la résine de matrice.

6. Outil de moulage (1) selon l'une quelconque des revendications précédentes, **caractérisé en ce qu'**il est prévu entre le frein de résine (10) et ledit au moins un joint (7) un raccord de vide ou de pression (11) sur l'outil de moulage (1) pour le raccordement d'une source de vide ou de pression.

7. Procédé de fabrication d'un composant en composite de fibres, qui est formé dans un outil de moulage par infiltration d'un demi-produit de fibres avec une résine de matrice et polymérisation de la résine de matrice, comportant les étapes suivantes:
a) introduction d'un demi-produit de fibres dans une région de demi-produit de fibres de l'outil de moulage,
b) pose d'au moins un joint dans l'outil de moulage pour la fermeture étanche au vide ou à la pression de la région de demi-produit de fibres,
c) placement d'un frein de résine dans l'outil de moulage entre la région de demi-produit de fibres et ledit au moins un joint, qui est réalisé en vue de contenir de la résine de matrice pendant l'infiltration du demi-produit de fibres introduit dans la région de demi-produit de fibres, le frein de résine (10) contenant un matériau de non-tissé et/ou de feutre, et
d) infiltration du demi-produit de fibres avec la résine de matrice et polymérisation de la résine de matrice injectée, afin de former le composant en composite de fibres.

8. Procédé selon la revendication 7, **caractérisé en ce que** le frein de résine présente une densité de matériau plus élevée que le demi-produit de fibres.

9. Procédé selon la revendication 7 ou 8, **caractérisé par** l'introduction d'un accélérateur de réaction dans le frein de résine, qui est réalisé en vue d'accélérer la réaction de polymérisation de la résine de matrice.

10. Procédé selon l'une quelconque des revendications 7 à 9, **caractérisé par** le chauffage du frein de résine au moyen d'un élément de chauffage pendant l'infiltration du demi-produit de fibres avec la résine de matrice.
